# EUROPEAN PATENT SPECIFICATION

(11) **EP 2 768 709 B1**
(45) Date of publication and mention of the grant of the patent: **22.03.2017**
(21) Application number: 11778796.0
(22) Date of filing: 19.10.2011
(51) Int. Cl.: B60W 30/18, B60W 20/00

(54) **VEHICLE TRACTION CONTROL METHOD AND SYSTEM**
ANTRIEBSSTEUERUNGSVERFAHREN UND SYSTEM FÜR EIN FAHRZEUG
PROCÉDÉ ET SYSTÈME D'ANTIPATINAGE À L'ACCÉLÉRATION D'UN VÉHICULE

(43) Date of publication of application: 27.08.2014
(73) Proprietor: Volvo Lastvagnar AB, 405 08 Göteborg (SE)
(72) Inventor: LARSSON, Lena, S-426 74 Västra Frölunda (SE); ÖBERG, Jan, S-417 29 Göteborg (SE); ALM, Filip, S-445 36 Bohus (SE)
(74) Representative: Volvo Technology Corporation
(86) International application number: PCT/EP2011/005263
(87) International publication number: WO 2013/056723

(56) References cited:
- EP-A2- 1 533 171
- WO-A1-2011/005173
- DE-A1-102008 036 048
- US-A- 4 914 983
- US-A1- 2011 009 235

## Description

### TECHNICAL FIELD OF THE INVENTION

The invention relates to a system and a method for drive train control for vehicles. The invention is particularly directed to the feature of rocking free a vehicle which is stuck on loose or slippery ground.

### BACKGROUND OF THE INVENTION

As is well known among drivers of motor vehicles is the fact that in the operation of such a vehicle, situations can arise in which the vehicle becomes immobilized due to blockages on the traveled road. For instance, one can think of driving into an impassable place in deep snow, loose sand, mud or into a short and deep depression in the roadway. Hence, under conditions of limited traction, it often occurs that when starting, driven wheels spin due to high rolling resistance of the vehicle.

In this case, drivers with manually operated transmissions of conventional vehicles may try to "rock" the vehicle free from its stationary position by moving forward and backward, the so-called "back-and-forth" rocking process. This can be carried out if the driver shifts the transmission alternately into forward and reverse gears. The above method of operation can be supported by well versed drivers, in that this alternating "to-and-fro" synchronistic movement of the vehicle requires the engagement of a forward and a reverse gear stage. In certain cases such a fast shift of the propulsion direction may be hard to perform, e.g. when the "rocking" distance is very short. In addition, to shift gears from forward to reverse may easily damage the gear box or the drive train if a change is not suitably made at the right moment and it may be wise to only use the traction forces in one direction and thus not provide any traction forces in the other direction. This strategy may cause less damage on the drive train but it also reduces the possibilities in managing to rock free from the position.

Where vehicles that are equipped with an automatic transmission are concerned, especially in a case of a step-to-step transmission having an automatic starting clutch, the overcoming of such roadway obstructions shows it as being somewhat more difficult since the driver has no direct influence over the activation of the starting and shifting of the clutch action.

In US 4,914,983 is described a method for rocking of a vehicle provided with an automatic transmission in order to free the vehicle from a stuck position by alternating the gear shift from forward to reverse. Still other systems for "rocking free" vehicles provided with automatic transmissions are described in for example WO 2004/098 940; US 7,445,582; US7,188,539; DE 10 2008 036 047; and EP 1 266 788.

WO 2011/005173 A1 discloses a rocking mode/ function providing traction torque alternating between backward and forward direction of the vehicle.

Even though these systems provide different systems and methods for rocking free of a vehicle, there is still a desire for an improved system which provides a better traction during a rocking sequence, e.g. by providing a quick and reliable change of the direction of traction force from reverse to forward, in order to improve the rocking function of an at least partly automatic rocking function

EP 1533171 A2 discloses a method for controlling a traction system of a vehicle, wherein said system comprises traction wheels forming part of two different propulsion systems. The traction system automatically detects if the vehicle is stuck in the ground and a stuck escaping mode is initiated where first and second propulsion units are independently controlled until the vehicle is no longer stuck. This document does not propose a rocking free mode and it does not give any hint on how to drive the two propulsion systems for providing a rocking free mode.

### DESCRIPTION OF THE INVENTION

An object of the invention is to provide a traction system and a method which improves the functionality of rocking free a vehicle which is stuck on the ground, e.g. in snow or mud. The traction system is intended to be a part of a normally automatic or semiautomatic gear shift control system or as an automated feature of a normally manual gear shift system.

The traction system according to the invention includes at least a first wheel, preferably a first pair of wheels on a first axle adapted to be driven by a first propulsion system, e.g. by a mechanical drive train connected to an internal combustion engine. The system further includes a second wheel, preferably a second pair of wheels which are driven by a second propulsion system, e.g. one or several hydraulic or electric propulsion units which either may be configured such that a single motor propel a common axle for a pair of wheels or separate propulsion units for driving a single wheel respectively. The first and second propulsion systems are configured such that they may be controlled independently of each other.

The traction system further comprises a control unit adapted to receive input signals concerning traction of at least one of said first or second traction wheel and/or vehicle speed. As is obvious to the skilled person in the art, by "control unit" is meant either a single processor or a multitude of processors together forming a "control unit". The control unit is further connected to the first and second propulsion systems and adapted to provide output signals to these systems to be used for controlling them. The control unit is programmed to provide an automatic rocking function for changing the direction of traction of the vehicle between reverse and forward propulsion by controlling the first and second propulsion systems. The propulsion systems are controlled to provide different traction sequences, i.e. they are not controlled to provide traction in the same direction at the same time always. The automatic rocking function is activated either automatically or manually. The function may be activated automatically in response to input signals concerning the traction of the vehicle, e.g. signals corresponding to wheel speeds, vehicle speed and or slip. The relevant input signals are in this case evaluated and if they are considered to indicate a situation in which the vehicle is decided to be stuck due to loose or slippery ground and undesired immobilized, the automatic rocking function is activated. However, such a function should be provided with security features such that it may not be activated unless it is turned on manually when driving at low speeds to avoid the function to be active at high velocities, e.g. such a system may be undesired if there is a crash situation and the vehicle switches on a rocking function.

As described briefly above, the automatic rocking function will provide a change of direction of traction of the vehicle in response to input signals when it is activated. The signals are used for indicating or corresponding to a loss of traction above a threshold value, e.g. by measuring wheel slip, and/or a vehicle velocity below a certain value. As an example, the criteria may be that the tractive force should change direction when the vehicle speed is below a certain value and the wheel slip for one or several wheels is above a certain value. The criteria may be set such that the allowed wheel slip may change with the vehicle speed and the criteria may be in the form of a look up table defining the desired velocity and wheel slip for one or more wheels when there should be a change of direction of the tractive force. The idea of an automatic rocking function as such is known for the skilled person in the art as well as criteria for changing the direction of the propulsive force. The rocking function will continue until a preprogrammed end of function criteria is fulfilled or manually deactivated. The end of function criteria may be the travelling beyond a certain distance in the same direction or a vehicle velocity above a certain limit.

In the following text, the system will be exemplified for a vehicle using a first pair of wheels driven by a mechanical drive train connected to an internal combustion engine and a second pair of wheels which are driven hydraulically. In one embodiment of the invention are each one of these wheels provided with a motor. These motors may be located at a pair of steerable front wheels.
The above described system is particularly suitable for an automatic "rocking free"- function since it will be possible to control the different propelling forces individually and to cooperate to provide a synergistic effect. For example, the different wheels or axles propelled by the different propulsion systems may be controlled to work together such that there will be possibilities to switch the traction forces of the vehicle from reverse to forward quickly without the delay for changing direction of traction for one single propulsion system. It could be possible to use the mechanical drive on the first pair of wheels solely for propulsion in one direction, e. g. forward, while the other pair of wheels propelled by for example hydraulic or other type of motors to provide for the tractive force for driving in the opposite direction, e.g. rearward. It could of course also be possible to reverse the traction force for each one of the propulsion systems such that booth propulsion systems will be used for both forward and rearward traction. The specific scheme for using and controlling the propulsion units depends on which propulsion systems which will be used and also the time and length of the movement in each respective direction, i.e. the rocking frequency or time for making the travel back and forth. For the above configuration with a mechanical drive system and a hydraulic drive system may the algorithm be programmed to use the mechanical drive only in a first direction and to use the hydraulic drive mainly in a second direction opposite to the first direction and as an aid during a part of the travel in the first direction. This scheme is based on the fact that there is in general a longer time needed to change the driving direction for the mechanical drive than the hydraulic drive. By using two independent traction systems which may work in different directions it may be possible to provide a continuous traction force which switches its direction by switching traction system to be used. The propulsion units are intended to be connected to different wheels or wheel pairs such that it will be possible to change the direction of traction from a first traction direction to a second opposite direction by changing from using the first propulsion system providing a tractive force to a first wheel or wheel pairs in the first direction to use the second propulsion system providing traction force in the opposite direction provided by another, second wheel or wheel pair. This feature will make it possible to adapt the force and direction of the traction (forward or rearward) to change quicker and be optimized for the specific condition in which the vehicle is stuck. The propulsion systems may thus be controlled such that the first propulsion system will stop to provide traction in the first direction at the same instant as the second propulsion system will start to provide traction in the opposite direction. However, both propulsion systems may also be controlled to mainly propel in the same direction and the hydraulic unit may be used to aid in the opposite direction. This way of controlling the rocking has the benefit of not needing to change the propulsion direction for the mechanical drive which thus will cause less wear of the mechanical drive train and gear box. However, provided there will be time enough to make the change of the driving direction of the mechanical power train, it may change its direction of driving force. When using the mechanical drive train in both directions in the rocking free algorithm, it may be programmed such that the force from the mechanical drive train will be working during the later part of the movement in each direction and using the first part for preparing and make the gear change from forward to reverse. The reason for this is that during the first part, when the direction is changed, will there usually be less rolling resistance and the vehicle will in most cases move rather easily without 4-wheel traction. In addition, if the vehicle should be stuck and not start to roll with only a wheel pair as traction, the vehicle may start to move at the instant the other pair of wheels start to provide traction. When the vehicle has moved the first part will the rolling resistance probably be higher since the wheels will be moving upwards in the hole or crater which the wheel is located in and further force is desired in order to make the vehicle move further in the hole and hopefully be able to be released from the stuck position.

Hydraulic wheel motors may be constructed very compact and still provide a great force and it is in general easier to get a less bulky arrangement by using hydraulic wheel motors at a wheel than an electric motor while desiring the same tractive force. This is of course an advantage when there is a limited space where the wheel motors may fit, e.g. at a pair of steerable wheels. In the present system is it further an advantage to have a propulsive force on the front wheels, i.e. the steerable wheels, when performing the automatic rocking free function. In many cases for heavy vehicles is there no propulsive force on the steerable front wheels and to be able to provide an efficient propulsion on the front wheels should be an advantage for this rocking function. Hence, to include a pair of hydraulic wheel motors instead of using a pair of electric motors may thus have the benefit of being able to provide a larger tractive force from the wheels driven by the wheel motors and thus improve the overall function of the automatic rocking function as compared to the use of electric wheel motors in this case.

The rocking free algorithm may have options for providing a rocking aiming at releasing the vehicle from the stuck position in a preferred direction and thus optimizing the control for being released forward or backward. In this case, both propulsion systems could be controlled to provide maximum traction in the same direction and only provide traction in the opposite direction if there is time enough to shift over to the opposite direction. In order to provide as much driving force in both directions, the propulsion units may be controlled to cooperate in the same direction but allowing one of the propulsion units to be disconnected from its traction wheels somewhat earlier and prepare a change of direction of the propulsion force at an early stage such that it will be possible to provide a traction force in the opposite direction without essentially any interruption in the traction when there is a desire to change direction of the vehicles travel. Hence, there are a multitude of different ways to be able to improve an automated rocking free function when having physically separated propulsion units working on different wheels or axles such that they may be controlled to cooperate in order to provide an efficient automatic or semiautomatic rocking free function.

### BRIEF DESCRIPTION OF THE DRAWINGS

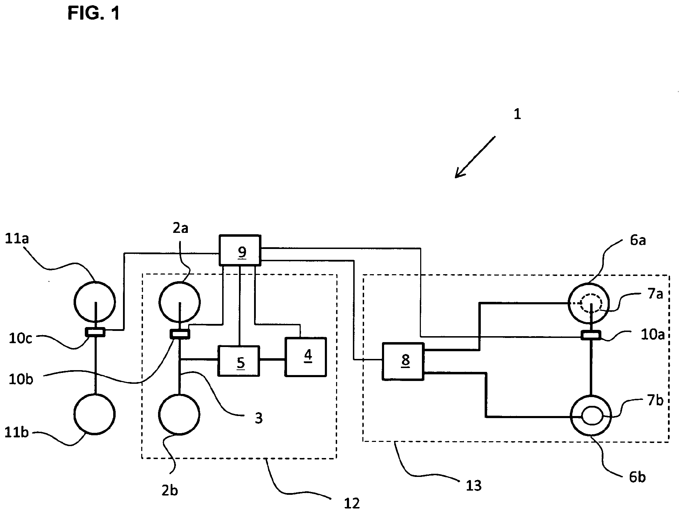

- Fig. 1: A schematic overview of a propulsion system for a vehicle provided with two propulsion systems.

### DETAILED DESCRIPTION OF THE DRAWINGS

In figure 1 is shown a schematic view of a traction system 1 for a vehicle. The traction system 1 comprises a first mechanical propulsion system 12 and a second hydraulic propulsion system 13. The first mechanical propulsion system 12 comprises a pair of traction wheels (2a, 2b) which are located on a rear, driven axle 3 which is powered by an internal combustion engine (ICE) 4. The rear, driven axle 3 is connected to the ICE 4 via a gearbox 5. The gear box 5 may be a stepped gear box and the mechanical drive train may comprise a Double Clutch Transmission (DCT) in order to reduce the time for a change of gear. The second hydraulic propulsion system 13 further comprises a second pair of traction wheels 6a, 6b, the front wheels, which are driven by a pair of hydraulic motors (7a, 7b) which are connected to and powered by a hydraulic pump 8. The traction system 1 also comprises a control unit 9 which is connected to the ICE 4, the gear box 5 and the hydraulic pump 8. The control unit could of course also be connected to other parts of the propulsion systems 12,13, e.g. it may be connected to the hydraulic motors 7a, 7b in order to send output signals to control valves in the motors 7a, 7b. The control unit is also connected to speed sensors 10a, 10b, 10c for indicating the speed of the front driven wheels 6a, 6b, the rear driven wheels 2a, 2b and a pair of rear, non-driven wheels 11a, 11b. These speed sensors 10a, 10b, 10c may thus be used to indicate the wheel speed and vehicle speed in order to control the propulsion system 1. The control system of the invention will now be exemplified by means of the schematic propulsion system 1 shown in fig 1.

In order to decide if the automatic rocking free control system shall be switched on may there either be an automatic function or a manually switch on function. A criteria for automatically switching on the rocking free function could for example be the sensing of a wheel speed from the first speed sensor 10a indicating a speed of the driven front wheels 6a, 6b and/or a sensed wheel speed from the second speed sensor 10b indicating a speed of the driven rear wheels 2a, 2b while the third speed sensor 10c indicating the speed of the rear, non-driven wheels 11a, 11b is zero. Hence, this situation corresponds to the existence of a propulsive force from the driven front wheels 6a, 6b by the first speed sensor 10a and/or the driven rear wheels 11a, 11b by the second speed sensor 10b while the third speed sensor 10c connected to the non-driven wheels 11a, 11b indicates that the vehicle actually not is moving and is stuck. There are of course other ways of detecting a stuck condition and even though this method provides for an efficient way of detecting a stuck condition, the skilled person should realize that the automatic rocking free function could be triggered automatically by different systems for indicating a stuck condition. Worth to be noted, such an automatic triggering of the automatic rocking free function should preferably be provided with restrictions and further indications in order to be automatically switched on, e.g. to prevent the system from automatically start up if the vehicle is immobilized due to an accident. The automatic switch on feature for the automatic rocking free function could also be connected to a crash sensing system avoiding the automatic rocking free system to be switched on if there is crash situation detected. Hence, when driving during normal condition such an automatic switch on feature of the rocking free function should normally be turned off. This automatic switch on function is generally thought to be active only during certain conditions, e.g. when driving at low speed in mud or in deep snow. The function could for example be automatically turned off above a certain speed limit, e.g. 15 km/h, and either be turned on automatically or when the driving has been steady below a certain speed limit, e.g. 15 km/h, for a predefined time, e.g. 30 seconds.

The automatic rocking free function may be activated automatically as described above or manually by the driver. When the automatic rocking free function is started will the control unit 9 control the functions of the first, rear pair of traction wheels 2a, 2b and the second pair of driven wheels 6a, 6b. In case there are further driven wheels or wheel pairs, they could of course also be controlled by the control unit 9. The propulsion systems are controlled independently, i.e. they will not need to provide the same traction in the same direction at the same time, but will cooperate in providing a traction force which alternates between backward and forward traction. The traction of the wheels may also be controlled such that the wheel slip is reduced by introducing a control function which reduces the torque to a wheel having a wheel slip value above a certain limit in order to provide a better traction. The change of direction of the tractive force will be made in dependence of the sensed vehicle speed and/or wheel speed from one or several of the wheel speed sensors 10a, 10b, 10c. These parameters may be used such that when sensor 10c which is connected to the non-driven wheels 11a, 11b has changed its indication from indicating a speed in a first direction, e.g. forward, to zero velocity, there will be a signal sent to at least one of the propulsion systems, i.e. the mechanical traction system powered by the ICE 4 or the hydraulic traction system by the hydraulic pump 8, to provide traction force in the opposite direction, e.g. rearward. This procedure will continue until the vehicle will be able to continuously travel in either direction. In case it is desirable to release the vehicle in a certain direction it may be possible to restrict the movement in the other direction e.g. by restricting the time or distance the tractive forces may provide traction in the "wrong" direction.
In the above embodiment has the means for deciding when to change the direction of the tractive forces been exemplified by speed sensors 10a, 10b, 10c which are connected to the front traction wheels 6a, 6b, the rear traction wheels 2a, 2b, and the rear non-tractive wheels 11a, 11b. These sensors may either be wheel speed sensors for sensing the speed of each individual wheel or sensors indicating the speed of a driven axle. In the case of the hydraulic wheel motors 7a, 7b it should be preferred to have a speed sensor 10a at each wheel to indicate the actual speed of each wheel since these wheels most probably may rotate independently of each other. Having separate speed sensors for these wheels should also aid in providing a control function for traction control and reducing wheel slip. The speed sensor 10c for the non-driven wheels 11a, 11b could be a speed sensor which senses the rotational speed of the wheel axle. However, the hydraulic motors 7a, 7b could be replaced with a single motor which is powering a common axle for the front wheels 6a, 6b and in that case there could be a single speed sensor sensing the front axle speed.
The control system could of course be provided with further sensors indicating relevant parameters and/or calculating further relevant parameters, e.g. wheel slip, in order to control the amount of traction and the point when there should be a change in the direction of traction or setting the traction force to zero for a wheel or a wheel pair. In order to avoid further "digging" into the ground by a wheel, the traction could be cut off if the wheel slip is above a defined limit.
As already discussed briefly above, the traction system of the vehicle may comprise further driven wheels, either included in the described propulsion systems or being part of an additional, third propulsion system. However, an additional pair of wheels should most likely be integrated in the already existing systems. For example, the non-driven rear wheels 11a, 11b and/or the front wheels powered by the hydraulic system may also be connected to the mechanical propulsion system 13. It is also obvious that hydraulic motors 7a, 7b could be located at any of the rear wheels 2a, 2b, 11a, 11b instead of, or in addition to, be located at the front wheels 6a, 6b. Hence, the specific configuration may vary within the scope of invention as long as there is at least one wheel, or pair of wheels, connected to a first propulsion unit, e.g. a mechanical drive train powered by an ICE, and at least another wheel, or a pair of wheels, connected to another propulsion unit, e.g. electric or hydraulic motors. Even though the propulsion systems may be connected only to rear wheels it is advantageous for the rocking function if the separate propulsion systems are connected to rear respectively front wheels.

An advantage with providing a vehicle having a main propulsion system 12 in the form of a mechanical drive train powered by an ICE 4 with a secondary propulsion system 13 in the form of hydraulic motors 7a, 7b is that a change of direction of propulsive forces may occur rapidly. It is in particular an advantage that at least a first pair of wheels 2a, 2b are powered by the mechanical drive train connected to ICE 4 while another, second wheel or wheel pair 6a, 6b are powered by a hydraulic motor 7a, 7b. By using different wheels or wheel pairs which are controlled independently of each other will it be possible to change the direction of the resulting tractive force instantly. For example, both a wheel pair 2a, 2b powered by a mechanical drive train connected to an ICE 4 and a wheel pair 6a, 6b powered by hydraulic motors 7a, 7b may provide a traction force in a first direction while being controlled by the automatic rocking free function. When it is detected that a change of direction of traction is desired or desired soon, one of the wheel pairs is prepared for a change of the direction of the propulsive force to the opposite direction. Then, at the same instant, the traction from the wheels still providing traction in the first direction are disconnected and the other pair of wheels which have been prepared for providing traction in the other direction, will start to provide a tractive force in the opposite direction. Hence, the present traction system will allow the rocking free function to provide traction force without any interruption while changing the direction of traction.
In case the interval between changing the direction is very short it may be an advantage to control the system such that the first propulsion system 12, which is mechanically connected to the ICE 4, will only provide traction in a first direction, e.g. forward, and the second propulsion system comprising the hydraulic motors 7a, 7b will only provide traction in the opposite direction. By using this scheme, there will be no or very little slack in changing the direction of traction.
However, since the hydraulic propulsion system 13 may change the direction of the tractive force faster than the mechanical propulsion system 12, it may be an advantage to use the hydraulic propulsion system 13 to provide traction in both directions. In this case, the hydraulic propulsion system 13 may still be controlled to mainly provide force in the direction opposite to the direction of the rear wheel pair 2a, 2b connected to the mechanical propulsion system 12 in order to avoid interruption when there is a change of traction direction.
According to another control algorithm may the rocking function be performed such that both the first and second propulsion systems 12, 13 are controlled to provide traction force in both directions. The propulsion units are controlled to provide traction force in the same (first) direction until the vehicle velocity is zero or very close to zero. When this criterion is fulfilled will the first pair of wheels 2a, 2b connected to the ICE 4 start to change direction of its traction to provide traction in the opposite direction while the hydraulic motors 7a, 7b will continue to provide traction in the first direction. The hydraulic motors 7a, 7b will continue to provide tractive forces in the first direction until the time left for changing the direction of tractive force of mechanically driven wheels 2a, 2b to the second, opposite direction is equal to the time for changing the traction direction of the hydraulic motors 7a, 7b. At this instant will the procedure for changing the direction of the traction force of the hydraulic motors start such that both the hydraulic driven wheels 6a, 6b and the mechanically driven wheels 2a, 2b will start at the same time to provide a tractive force in the second, opposite direction. By using this control algorithm will the hydraulic wheels 6a, 6b aid in maintaining the vehicle at a position at or close to one end of the rocking limits until both the hydraulically and mechanically driven wheels are ready to provide traction in the second, opposite direction and thereby improving the tractive force from the vehicle when starting to move in the opposite direction.
The use of two separate propulsion systems connected to different wheels or different wheel pairs thus allows for a lot of beneficial possibilities for improving an automatic rocking free function which are within the scope of the invention for the skilled person in the art. It is furthermore obvious for the skilled person in the art to use known methods and system for detecting wheel speeds, vehicle speed and/or wheel slip to be used as input signals in order to control the automatic rocking free function.

## Claims

1. A method for controlling a traction system (1) of a vehicle, said system comprising:
- a first traction wheel (2a) forming part of a first propulsion system (12),
- a second traction wheel (7a) forming part of a second propulsion system (13),
- at least one sensor (10a, 10b, 10c) indicating vehicle speed and/or wheel speed for at least one wheel (2a, 2b, 7a, 7b, 11a, 11b),
- a control unit (9) for controlling said first and second propulsion system (12, 13),
wherein
said method comprises the steps of;
- manually or automatically detecting if the vehicle is stuck on the ground,
- manually or automatically start up an automatic rocking free mode wherein the first and second propulsion system (12, 13) are independently controlled by the control unit (9) to cooperate and provide traction force which alternates between backward and forward traction, said shift of direction of traction will be made in dependence of the sensed vehicle and/or wheel speed;
- manually or automatically end the rocking free mode when it is decided that the vehicle no longer is stuck to the ground,
and wherein the method further comprising;
- the first propulsion system (12) is controlled to mainly provide traction force in a first direction, i.e. forward or reverse, while the second propulsion system (13) is controlled to mainly provide traction in a second direction opposite to the first direction,
or;.
- when it is decided to perform a change of traction direction from a first direction to a second opposite direction is one propulsion system (12 or 13) controlled to change its traction to neutral first and the other propulsion system (13 or 12) is controlled to continue to propel in the first direction for a longer time than the one propulsion system (12 or 13) and the one propulsion system (12 or 13) will start to provide traction in the second, opposite direction at the same instant the other propulsion system (13 or 12) will stop to provide traction in the first direction.

2. A method according to claim 1 wherein said first propulsion system (12) comprises a mechanical drive train including an internal combustion engine (4) which provides a traction force to said first traction wheel (2a) via a gear box (5).

3. A method according to any previous claim wherein said second propulsion system (13) is a hydraulic propulsion system comprising a hydraulic pump (8) for powering a hydraulic motor (6a) in order to provide a traction force to said second traction wheel (7a).

4. A method according to claim 3 wherein said second propulsion system (13) comprises a pair of hydraulic motors (6a, 6b) which are located at a pair of wheels (7a, 7b) which are steerable front wheels.

5. A method according to any previous claim when the method comprises that the first propulsion system (12) is controlled to mainly provide traction force in a first direction, i.e. forward or reverse, while the second propulsion system (13) is controlled to mainly provide traction in a second direction opposite to the first direction, wherein said first or second propulsion system (12, 13) is prevented from providing traction in both directions if the time interval between the desired change of direction of traction is below a certain time limit.

6. A method according to any previous claim when the method comprises that the first propulsion system (12) is controlled to mainly provide traction force in a first direction, i.e. forward or reverse, while the second propulsion system (13) is controlled to mainly provide traction in a second direction opposite to the first direction, wherein said first propulsion system (12) is controlled to alternately provide traction in a first direction, i.e. backward or forward, when the vehicle is travelling in said first direction and no traction when the vehicle is driving in a second direction opposite said first direction while the second propulsion system (13) is controlled to alternately cooperate with the first propulsion system (12) and provide traction in the first direction and also provide traction in said second direction when the vehicle is driving in said second direction.

7. A method according to any of claims 1-5 when the method comprises that the first propulsion system (12) is controlled to mainly provide traction force in a first direction, i.e. forward or reverse, while the second propulsion system (13) is controlled to mainly provide traction in a second direction opposite to the first direction, wherein each one of said first and second propulsion systems (12, 13) are controlled to provide traction in both directions.

8. A traction system (1) for a vehicle wherein said system comprises:
- A first traction wheel (2a) being part of a first propulsion system (12) of the vehicle,
- A second traction wheel (7a) being a part of a second propulsion system (13) of the vehicle, said second propulsion system (13) being able to be controlled independently of said first propulsion system (12),
- A control unit (9) adapted to receive input signals concerning traction of at least said first or second traction wheel (2a, 7a) and/or vehicle speed and adapted to provide output signals to be used in controlling the first and second propulsion systems (12,13), wherein
- said control unit (9) is programmed to provide an automatic rocking function for changing the direction of traction of the vehicle between reverse and forward propulsion by controlling said first propulsion system (12) and said second propulsion system (13) wherein the traction of the first respectively the second propulsion system (12, 13) is controlled to provide different traction sequences,
- said automatic rocking function is activated either in response to input signals concerning traction indicating a situation in which the vehicle is decided to be stuck due to loose or slippery ground and undesired immobilized, or manually activated,
- said automatic rocking function providing a change of direction of traction of the vehicle by activating a traction force of the first or second propulsion system (12, 13) in a direction opposite to the foregoing direction in response to input signals indicating or corresponding to a loss of traction or wheel slip above a threshold value and/or a vehicle velocity below a certain value,
- said rocking function continuing until a preprogrammed end of function criteria is fulfilled, or manually deactivated, **characterized in that** said control unit is programmed to;
- control the first propulsion system (12) to mainly provide traction force in a first direction, i.e. forward or reverse, while the second propulsion system (13) is controlled to mainly provide traction in a second direction opposite to the first direction,
or;.
- when it is decided to perform a change of traction direction from a first direction to a second opposite direction is one propulsion system (12 or 13) controlled to change its traction to neutral first and the other propulsion system (13 or 12) is controlled to continue to propel in the first direction for a longer time than the one propulsion system (12 or 13) and the one propulsion system (12 or 13) will start to provide traction in the second, opposite direction at the same instant the other propulsion system (13 or 12) will stop to provide traction in the first direction.

9. A traction system (1) for a vehicle according to claim 8 **characterized in that** said control unit is programmed to control at least one of said propulsion systems (12, 13) to only propel in either reverse or forward direction.

10. A traction system (1) according to any of claims 8 or 9 wherein said first propulsion system (12) comprises a first traction wheel pair (2a, 2b) is connected to a mechanical drive and powered by an internal combustion engine (4) via a gear box (5).

11. A traction system (1) according to claim 10 wherein said gear box (5) is a stepped gearbox.

12. A traction system according to claim 11 wherein said drivetrain comprises a Double Clutch Transmission (DCT).

13. A traction system according to any of claim 8-12 wherein said second propulsion system (13) is a hydraulic system.

14. A traction system according to claim 13 wherein said second propulsion system (13) comprises wheel motors (7a, 7b) and there is one motor located at each respective wheel of a second traction wheel pair (6a, 6b).

## Patentansprüche

1. Verfahren zum Steuern eines Traktionssystems (1) eines Fahrzeugs, wobei das System umfasst:
- ein erstes Traktionsrad (2a), das Teil eines ersten Antriebssystems (12) ist,
- ein zweites Traktionsrad (7a), das Teil eines zweiten Antriebssystems (13) ist,
- wenigstens einen Sensor (10a, 10b, 10c), der eine Fahrzeuggeschwindigkeit und/oder eine Radgeschwindigkeit für wenigstens ein Rad (2a, 2b, 7a, 7b, 11a, 11b) anzeigt,
- eine Steuereinheit (9) zum Steuern des ersten und des zweiten Antriebssystems (12, 13),
wobei
das Verfahren die Schritte umfasst:
- manuelles oder automatisches Erfassen, ob das Fahrzeug am Boden festgefahren ist,
- manuelles oder automatisches Starten eines automatischen Freischaukelmodus, wobei das erste und das zweite Antriebssystem (12, 13) durch die Steuereinheit (9) unabhängig gesteuert werden, um zusammenzuwirken und eine Traktionskraft bereitzustellen, die zwischen Rückwärts und Vorwärtstraktion abwechselt, wobei der Traktionsrichtungswechsel in Abhängigkeit der erfassten Fahrzeug- und/oder Radgeschwindigkeit erfolgt;
- manuelles oder automatisches Beenden des Freischaukelmodus, wenn entschieden wird, dass das Fahrzeug nicht mehr am Boden festgefahren ist,
und wobei das Verfahren ferner umfasst,
- dass das erste Antriebssystem (12) so gesteuert wird, dass es hauptsächlich Traktionskraft in einer ersten Richtung, d.h. vorwärts oder rückwärts, bereitstellt, während das zweite Antriebssystem (13) so gesteuert wird, dass es hauptsächlich Traktion in einer zweiten, der ersten Richtung entgegengesetzten Richtung bereitstellt,
oder:
- dass, wenn entschieden wird, eine Traktionsrichtungsänderung von einer ersten Richtung zu einer zweiten entgegengesetzten Richtung durchzuführen, ein Antriebssystem (12 oder 13) so gesteuert wird, dass es seine Traktion zuerst in den Leerlauf wechselt, und das andere Antriebssystem (13 oder 12) so gesteuert wird, dass es das Antreiben in der ersten Richtung für eine längere Zeit als das eine Antriebssystem (12, oder 13) fortsetzt, und das eine Antriebssystem (12 oder 13) beginnt, Traktion in der zweiten, entgegengesetzten Richtung in demselben Moment bereitzustellen, in dem das andere Antriebssystem (13 oder 12) damit aufhört, Traktion in der ersten Richtung bereitzustellen.

2. Verfahren nach Anspruch 1, wobei das erste Antriebssystem (12) einen mechanischen Antriebsstrang umfasst, der einen Verbrennungsmotor (4) einschließt, der eine Traktionskraft für das erste Traktionsrad (2a) über ein Getriebe (5) bereitstellt.

3. Verfahren nach einem vorhergehenden Anspruch, wobei das zweite Antriebssystem (13) ein hydraulisches Antriebssystem ist, das eine Hydraulikpumpe (8) zum Antreiben eines Hydraulikmotors (6a) umfasst, um eine Traktionskraft für das zweite Traktionsrad (7a) bereitzustellen.

4. Verfahren nach Anspruch 3, wobei das zweite Antriebssystem (13) ein Paar von Hydraulikmotoren (6a, 6b) umfasst, die an einem Paar von Rädern (7a, 7b) angeordnet sind, die lenkbare Vorderräder sind.

5. Verfahren nach einem vorhergehenden Anspruch, wobei das Verfahren umfasst, dass das erste Antriebssystem (12) so gesteuert wird, dass es hauptsächlich Traktionkraft in einer ersten Richtung, d.h. vorwärts oder rückwärts, bereitstellt, während das zweite Antriebssystem (13) so gesteuert wird, dass es hauptsächlich Traktion in einer zweiten, der ersten Richtung entgegengesetzten Richtung bereitstellt, wobei das erste oder das zweite Antriebssystem (12, 13) daran gehindert wird, Traktion in beiden Richtungen bereitzustellen, wenn die Zeitspanne zwischen der gewünschten Traktionsrichtungsänderung unter einer bestimmten Zeitbegrenzung liegt.

6. Verfahren nach einem vorhergehenden Anspruch, wobei das Verfahren umfasst, dass das erste Antriebssystem (12) so gesteuert wird, dass es hauptsächlich Traktionskraft in einer ersten Richtung, d.h. vorwärts oder rückwärts, bereitstellt, während das zweite Antriebssystem (13) so gesteuert wird, dass es hauptsächlich Traktion in einer zweiten, der ersten Richtung entgegengesetzten Richtung bereitstellt, wobei das erste Antriebssystem (12) so gesteuert wird, dass es abwechselnd Traktion in einer ersten Richtung, d.h. rückwärts oder vorwärts, bereitstellt, wenn das Fahrzeug in die erste Richtung fährt, und keine Traktion bereitstellt, wenn das Fahrzeug in eine zweite, der ersten Richtung entgegengesetzte Richtung fährt, während das zweite Antriebssystem (13) so gesteuert wird, dass es abwechselnd mit dem ersten Antriebssystem (12) zusammenwirkt und Traktion in der ersten Richtung bereitstellt und auch Traktion in der zweiten Richtung bereitstellt, wenn das Fahrzeug in die zweite Richtung fährt.

7. Verfahren nach einem der Ansprüche 1-5, wobei das Verfahren umfasst, dass das erste Antriebssystem (12) so gesteuert wird, dass es hauptsächlich Traktionskraft in einer ersten Richtung, d.h. vorwärts oder rückwärts, bereitstellt, während das zweite Antriebssystem (13) so gesteuert wird, dass es hauptsächlich Traktion in einer zweiten, der ersten Richtung entgegengesetzten Richtung bereitstellt, wobei jedes des ersten und des zweiten Antriebssystems (12, 13) so gesteuert werden, dass sie Traktion in beiden Richtungen bereitstellen.

8. Traktionssystem (1) für ein Fahrzeug, wobei das System umfasst:
- ein erstes Traktionsrad (2a), das Teil eines ersten Antriebssystems (12) des Fahrzeugs ist,
- ein zweites Traktionsrad (7a), das Teil eines zweiten Antriebssystems (13) des Fahrzeugs ist, wobei das zweite Antriebssystem (13) unabhängig von dem ersten Antriebssystem (12) steuerbar ist,
- eine Steuereinheit (9), die daran angepasst ist, Eingangssignale betreffend die Traktion wenigstens des ersten oder des zweiten Traktionsrads (2a, 7a) und/oder die Fahrzeuggeschwindigkeit zu empfangen, und daran angepasst ist, Ausgangssignale zur Verwendung beim Steuern des ersten und des zweiten Antriebssystems (12, 13) bereitzustellen, wobei
- die Steuereinheit (9) dazu programmiert ist, eine automatische Schaukelfunktion zum Ändern der Traktionsrichtung des Fahrzeugs zwischen Rückwärts- und Vorwärtsantrieb durch Steuern des ersten Antriebssystems (12) und des zweiten Antriebssystems (13) bereitzustellen, wobei die Traktion des ersten bzw. des zweiten Antriebssystems (12, 13) so gesteuert wird, dass sie unterschiedliche Traktionssequenzen bereitstellt,
- wobei die automatische Schaukelfunktion entweder ansprechend auf Eingangssignale betreffend die Traktion aktiviert wird, die eine Situation anzeigen, in der entschieden wird, dass das Fahrzeug aufgrund von lockerem oder rutschigen Boden festgefahren und ungewünscht immobilisiert ist, oder manuell aktiviert wird,
- wobei die automatische Schaukelfunktion eine Traktionsrichtungsänderung des Fahrzeugs durch Aktivieren einer Traktionskraft des ersten oder des zweiten Antriebssystems (12, 13) in einer zu der vorhergehenden Richtung entgegengesetzten Richtung ansprechend auf Eingangssignale bereitstellt, die einen Traktionsverlust oder Radschlupf über einem Schwellwert und/oder eine Fahrzeuggeschwindigkeit unter einem bestimmten Wert anzeigen oder diesen entsprechen,
- wobei die Schaukelfunktion weitergeht, bis ein vorprogrammiertes Funktionsendekriterium erfüllt ist, oder sie manuell deaktiviert wird,
**dadurch gekennzeichnet, dass** die Steuereinheit dazu programmiert ist,
- das erste Antriebssystem (12) so zu steuern, dass es hauptsächlich Traktionskraft in einer ersten Richtung, d.h. vorwärts oder rückwärts, bereitstellt, während das zweite Antriebssystem (13) so gesteuert wird, dass es hauptsächlich Traktion in einer zweiten, der ersten Richtung entgegengesetzten Richtung bereitstellt,
oder:
- wenn entschieden wird, eine Traktionsrichtungsänderung von einer ersten Richtung zu einer zweiten entgegengesetzten Richtung durchzuführen, ein Antriebssystem (12 oder 13) so zu steuern, dass es seine Traktion zuerst in den Leerlauf wechselt, und das andere Antriebssystem (13 oder 12) so gesteuert wird, dass es das Antreiben in der ersten Richtung für eine längere Zeit als das eine Antriebssystem (12 oder 13) fortsetzt, und das eine Antriebssystem (12 oder 13) beginnt, Traktion in der zweiten, entgegengesetzten Richtung in demselben Moment bereitzustellen, in dem das andere Antriebssystem (13 oder 12) damit aufhört, Traktion in der ersten Richtung bereitzustellen.

9. Traktionssystem (1) für ein Fahrezug nach Anspruch 8, **dadurch gekennzeichnet, dass** die Steuereinheit dazu programmiert ist, wenigstens eines der Antriebssysteme (12, 13) so zu steuern, dass es nur entweder in Rückwärts- oder Vorwärtsrichtung antreibt.

10. Traktionssystem (1) nach einem der Ansprüche 8 oder 9, wobei das erste Antriebssystem (12) ein erste Traktionsräderpaar (2a, 2b) umfasst, das mit einem mechanischen Antrieb verbunden ist und durch einen Verbrennungsmotor (4) über ein Getriebe (5) angetrieben wird.

11. Traktionssystem (1) nach Anspruch 10, wobei das Getriebe (5) ein Stufengetriebe ist.

12. Traktionssystem nach Anspruch 11, wobei der Antriebsstrang ein Doppelkupplungsgetriebe (DCT) umfasst.

13. Traktionssystem nach einem der Ansprüche 8-12, wobei das zweite Antriebssystem (13) ein hydraulisches System ist.

14. Traktionssystem nach Anspruch 13, wobei das zweite Antriebssystem (13) Radmotoren (7a, 7b) umfasst und es einen Motor gibt, der an jedem jeweiligen Rad eines zweiten Traktionsräderpaares (6a, 6b) angeordnet ist.

## Revendications

1. Procédé de commande d'un système de traction (1) d'un véhicule, ledit système comprenant :
- une première roue de traction (2a) faisant partie d'un premier système de propulsion (12),
- une deuxième roue de traction (7a) faisant partie d'un deuxième système de propulsion (13),
- au moins un capteur (10a, 10b, 10c) indiquant la vitesse de véhicule et/ou la vitesse de roue pour au moins une roue (2a, 2b, 7a, 7b, 11a, 11 b),
- une unité de commande (9) pour commander lesdits premier et deuxième systèmes de propulsion (12, 13),
dans lequel
ledit procédé comprend les étapes qui consistent :
- à détecter manuellement ou automatiquement si le véhicule est coincé sur le sol,
- à démarrer manuellement ou automatiquement un mode de dégagement automatique dans lequel les premier et deuxième systèmes de propulsion (12, 13) sont commandés indépendamment par l'unité de commande (9) pour coopérer et fournir une force de traction qui alterne entre la traction avant et arrière, ledit changement de direction de traction sera effectué en fonction de la vitesse de véhicule et/ou de la vitesse de roue détectée(s) ;
- à mettre fin manuellement ou automatiquement au mode de dégagement lorsqu'il est décidé que le véhicule n'est plus coincé sur le sol,
et dans lequel le procédé comprenant en outre :
- le premier système de propulsion (12) est commandé pour fournir principalement une force de traction dans une première direction, c'est-à-dire avant ou arrière, tandis que le deuxième système de propulsion (13) est commandé pour fournir principalement une traction dans une deuxième direction opposée à la première direction,
ou ;
- lorsqu'il est décidé d'effectuer un changement de direction de traction d'une première direction à une deuxième direction opposée, un système de propulsion (12 ou 13) est commandé pour changer sa traction au point mort d'abord et l'autre système de propulsion (13 ou 12) est commandé pour continuer à propulser dans la première direction pendant une durée plus longue que celle du système de propulsion (12 ou 13) et le système de propulsion (12 ou 13) commencera à fournir une traction dans la deuxième direction opposée au même instant auquel l'autre système de propulsion (13 ou 12) arrêtera de fournir une traction dans la première direction.

2. Procédé selon la revendication 1, dans lequel ledit premier système de propulsion (12) comprend un groupe motopropulseur mécanique comportant un moteur à combustion interne (4) qui fournit une force de traction à ladite première roue de traction (2a) par l'intermédiaire d'une boîte de vitesse (5).

3. Procédé selon l'une des revendications précédentes, dans lequel ledit deuxième système de propulsion (13) est un système de propulsion hydraulique comprenant une pompe hydraulique (8) pour alimenter un moteur hydraulique (6a) afin de fournir une force de traction à ladite deuxième roue de traction (7a).

4. Procédé selon la revendication 3, dans lequel ledit deuxième système de propulsion (13) comprend une paire de moteurs hydrauliques (6a, 6b) qui sont situés au niveau d'une paire de roues (7a, 7b) qui sont des roues avant orientables.

5. Procédé selon l'une des revendications précédentes lorsque le procédé comprend que le premier système de propulsion (12) est commandé pour fournir principalement une force de traction dans une première direction, c'est-à-dire avant ou arrière, tandis que le deuxième système de propulsion (13) est commandé pour fournir principalement une traction dans une deuxième direction opposée à la première direction, où ledit premier ou deuxième système de propulsion (12, 13) est empêché de fournir une traction dans les deux directions si l'intervalle de temps entre le changement souhaité de directions de traction est en dessous d'une certaine limite de temps.

6. Procédé selon l'une des revendications précédentes lorsque le procédé comprend que le premier système de propulsion (12) est commandé pour fournir principalement une force de traction dans une première direction, c'est-à-dire avant ou arrière, tandis que le deuxième système de propulsion (13) est commandé pour fournir principalement une traction dans une deuxième direction opposée à la première direction, où ledit premier système de propulsion (12) est commandé pour fournir de manière alternée une traction dans une première direction, c'est-à-dire arrière ou avant, lorsque le véhicule se déplace dans ladite première direction et pour ne pas fournir une traction lorsque le véhicule roule dans une deuxième direction opposée à ladite première direction tandis que le deuxième système de propulsion (13) est commandé pour coopérer de manière alternée avec le premier système de propulsion (12) et pour fournir une traction dans la première direction et également pour fournir une traction dans ladite deuxième direction lorsque le véhicule roule dans ladite deuxième direction.

7. Procédé selon l'une des revendications 1 à 5 lorsque le procédé comprend que le premier système de propulsion (12) est commandé pour fournir principalement une force de traction dans une première direction, c'est-à-dire avant ou arrière, tandis que le deuxième système de propulsion (13) est commandé pour fournir principalement une traction dans une deuxième direction opposée à la première direction, où chacun desdits premier et deuxième systèmes de propulsion (12, 13) est commandé pour fournir une traction dans les deux directions.

8. Système de traction (1) pour un véhicule, dans lequel ledit système comprend :
- une première roue de traction (2a) faisant partie d'un premier système de propulsion (12) du véhicule,
- une deuxième roue de traction (7a) faisant partie d'un deuxième système de propulsion (13) du véhicule, ledit deuxième système de propulsion (13) pouvant être commandé indépendamment dudit premier système de propulsion (12),
- une unité de commande (9) adaptée pour recevoir des signaux d'entrée concernant la traction d'au moins ladite première ou deuxième roue de traction (2a, 7a) et/ou la vitesse de véhicule et adaptée pour fournir des signaux de sortie à utiliser dans la commande des premier et deuxième systèmes de propulsion (12, 13), dans lequel
- ladite unité de commande (9) est programmée pour fournir une fonction de dégagement automatique pour changer la direction de traction du véhicule entre des propulsions avant et arrière en commandant ledit premier système de propulsion (12) et ledit deuxième système de propulsion (13) où la traction du premier, respectivement du deuxième système de propulsion (12, 13) est commandée pour fournir différentes séquences de traction,
- ladite fonction de dégagement automatique est activée soit en réponse à des signaux d'entrée concernant la traction indiquant une situation dans laquelle il est décidé que le véhicule est coincé en raison d'un sol meuble ou glissant et immobilisé de manière indésirable, ou activée manuellement,
- ladite fonction de dégagement automatique assurant un changement de direction de traction du véhicule en activant une force de traction du premier ou du deuxième système de propulsion (12, 13) dans une direction opposée à la direction précédente en réponse à des signaux d'entrée indiquant ou correspondant à une perte de traction ou à un patinage de roue au-dessus d'une valeur seuil et/ou à une vitesse de véhicule en dessous d'une certaine valeur,
- ladite fonction de dégagement se poursuit jusqu'à ce qu'un critère de fin de fonction préprogrammé soit rempli, ou désactivée manuellement,
**caractérisé en ce que** ladite unité de commande est programmée :
- pour commander le premier système de propulsion (12) pour fournir principalement une force de traction dans une première direction, c'est-à-dire avant ou arrière, tandis que le deuxième système de propulsion (13) est commandé pour fournir principalement une traction dans une deuxième direction opposée à la première direction ;
ou ;
- lorsqu'il est décidé d'effectuer un changement de direction de traction d'une première direction à une deuxième direction opposée, un système de propulsion (12 ou 13) est commandé pour changer sa traction au point mort d'abord et l'autre système de propulsion (13 ou 12) est commandé pour continuer à propulser dans la première direction pendant une durée plus longue que celle du système de propulsion (12 ou 13) et le système de propulsion (12 ou 13) commencera à fournir une traction dans la deuxième direction opposée au même instant auquel l'autre système de propulsion (13 ou 12) arrêtera de fournir une traction dans la première direction.

9. Système de traction (1) pour un véhicule selon la revendication 8, **caractérisé en ce que** ladite unité de commande est programmée pour commander au moins l'un desdits systèmes de propulsion (12, 13) pour propulser seulement dans la direction avant ou arrière.

10. Système de traction (1) selon l'une des revendications 8 et 9, dans lequel ledit premier système de propulsion (12) comprend une première paire de roues de traction (2a, 2b) qui est reliée à un dispositif d'entraînement mécanique et alimentée par un moteur à combustion interne (4) par l'intermédiaire d'une boîte de vitesse (5).

11. Système de traction (1) selon la revendication 10, dans lequel ladite boîte de vitesse (5) est une boîte de vitesse étagée.

12. Système de traction selon la revendication 11, dans lequel ledit groupe motopropulseur comprend une Transmission à Double Embrayage (DCT).

13. Système de traction selon l'une des revendications 8 à 12, dans lequel ledit deuxième système de propulsion (13) est un système hydraulique.

14. Système de traction selon la revendication 13, dans lequel ledit deuxième système de propulsion (13) comprend des moteurs-roue (7a, 7b) et il y a un moteur situé au niveau de chaque roue respective d'une deuxième paire de roues de traction (6a, 6b).
